# EUROPÄISCHE PATENTSCHRIFT

(11) **EP 1 432 306 B1**
(45) Veröffentlichungstag und Bekanntmachung des Hinweises auf die Patenterteilung: **23.11.2005**
(21) Anmeldenummer: 02719661.7
(22) Anmeldetag: 28.02.2002
(51) Int. Cl.: A01N 25/00, A01N 25/34

(54) **SCHÄDLINGSBEKÄMPFUNGSMITTEL UND VERFAHREN ZU DESSEN HERSTELLUNG**
PESTICIDE AND METHOD FOR THE PRODUCTION THEREOF
INSECTICIDE ET PROCEDE DE FABRICATION

(30) Priorität: 04.10.2001 DE 10150938
(43) Veröffentlichungstag der Anmeldung: 30.06.2004
(73) Patentinhaber: Frunol Delicia GmbH, 59425 Unna (DE)
(72) Erfinder: FRIEDEL, Jürgen, 59425 Unna (DE)
(74) Vertreter: Wablat, Wolfgang
(86) Internationale Anmeldenummer: PCT/DE2002/000762
(87) Internationale Veröffentlichungsnummer: WO 2003/034821

(56) Entgegenhaltungen:
- WO-A-00/11948
- GB-A- 2 076 292
- GB-A- 2 117 242
- DATABASE CA [Online] CHEMICAL ABSTRACTS SERVICE, COLUMBUS, OHIO, US; YOUSSEF, HAMADA M.: "Technological studies of non-poison and anticoagulant paraffin waxy discs on rats and mice" retrieved from STN Database accession no. 134:291515 XP002203363 & ALEXANDRIA SCIENCE EXCHANGE (2000), 21(3), 229-236 ,
- DATABASE CA [Online] CHEMICAL ABSTRACTS SERVICE, COLUMBUS, OHIO, US; VARTAK, P. H. ET AL: "Laboratory evaluation of toxic baits for mosquito (Aedes aegypti) larvae" retrieved from STN Database accession no. 124:281941 XP002203364 & INDIAN J. EXP. BIOL. (1996), 34(3), 272-3 ,

## Beschreibung

Die Erfindung bezieht sich auf Schädlingsbekämpfungsmittel in Form rotationssymmetrischer Granulatpartikel zur Vernichtung von Schnecken, sowie ein Verfahren zu dessen Herstellung.

Als granulatartiges Streugut ausgebildete Schneckenbekämpfungsmittel, die mit unterschiedlichen Wirkstoffen zur Vernichtung von Schnecken oder Ratten und Mäusen eingesetzt werden, sind seit langem bekannt.

Nur beispielhaft wird hier auf ein Schneckenbekämpfungsmittel auf der Basis des die Schleimhäute der Schnecken zerstörenden Wirkstoffs Metaldehyd verwiesen, das üblicherweise eine zylindrische Form aufweist. Bei einem zwischen 4 und 6 % liegenden Wirkstoffanteil werden im Agrarbereich 3 bis 6 kg Schneckenbekämpfungsmittel pro Hektar und im Hobbybereich 6 kg pro Hektar (0,6 g/m²) ausgebracht, um die Schnecken erfolgreich zu bekämpfen. Abgesehen von der relativ hohen Aufwandmenge ist die maschinelle Wurfweite der zylindrischen Schneckenkörner auf ca. 15 m begrenzt. Zudem wird aufgrund ungleicher Längen der zylinderförmigen Schneckenkörner, die zwischen 3 und 8 mm lang sein können, ein oftmals ungleichmäßiges Streubild erzeugt. Dadurch verringert sich die Wirksamkeit des Schneckenbekämpfungsmittels, oder es muss mehr Schneckenbekämpfungsmittel aufgewendet werden, um überall die erforderliche Streudichte (Flächenabdeckung) zu erreichen. Andererseits soll die aufgrund einer zu geringen Köderdichte unzureichende Wirkung des ausgebrachten Schneckenbekämpfungsmittels durch einen erhöhten Wirkstoffanteil ausgeglichen werden. Die hohe Aufwandmenge zur Erzielung einer ausreichenden Flächenabdeckung und ein höherer Wirkstoffanteil sind maßgebliche Kostenfaktoren und tragen gleichermaßen zur Umweltbelastung bei. Insbesondere dann, wenn die Produkte nicht abriebfest und nicht wasserbeständig sind, ist dann von einer erheblichen Kontaminierung des Umfeldes im Streubereich auszugehen.

Die oben am Beispiel eines Schneckenbekämpfungsmittels geschilderten Probleme treten gleichermaßen auch bei anderen Schädlingsbekämpfungsmitteln auf.

Der Erfindung liegt die Aufgabe zugrunde, ein umweltschonend und kostensparend einsetzbares Schädlingsbekämpfungsmittel sowie ein Verfahren zu dessen Herstellung so auszubilden, dass bei verringertem Aufwand pro Flächeneinheit und reduziertem Wirkstoffanteil dennoch eine hohe Belegungsdichte bzw. Wirksamkeit des Ködergranulats erzielt wird und gleichzeitig eine große Wurfweite und gleichmäßige Verteilung der Köder gewährleistet ist.

Das Ködergranulat soll gemäß einer weiteren Zielstellung nicht staubbildend und außerdem feuchtegeschützt ausgebildet sein.

Erfindungsgemäß wird die Aufgabe mit einem Schädlingsbekämpfungsmittel gemäß den Merkmalen des Patentanspruches 1 gelöst.

Das erfindungsgemäße Verfahren zur Herstellung des Ködergranulats nach Anspruch 1 ergibt sich aus den Merkmalen des Patentanspruches 6.

Weitere Merkmale und vorteilhafte Ausgestaltungen der Erfindung sind in den Unteransprüchen aufgeführt.

Der grundlegende Erfindungsgedanke besteht darin, dass das Schädlingsbekämpfungsmittel aus einem linsen- oder diskusförmigen Ködergranulat besteht, das erzeugt wird, indem eine in einem Extruder mit Hilfe von Stärke unter Feuchte-, Druck- und Wärmeeinwirkung plastifizierte, gelatinierte und kompaktierte Masse extrudiert und in flache Scheiben geschnitten wird, die anschließend expandieren und dabei durch Ausbauchung an den Schnittflächen eine Linsen- oder Diskusform annehmen.

Ein derart hergestelltes und geformtes Ködergranulat zeichnet sich bei der maschinellen Ausbringung durch hervorragende Flugeigenschaften und eine dementsprechend große Wurfweite und ein gleichmäßiges Streubild aus. Durch die große Wurfweite werden einerseits der Aufwand und andererseits die Fruchtverluste beim Ausstreuen des Ködergranulats auf landwirtschaftlichen Nutzflächen verringert. Das gleichmäßige Streubild und eine hohe Belegungsdichte, die um 50 % größer ist als bei herkömmlichem zylindrischen Ködergranulat ist, gewährleisten einen sparsamen Materialeinsatz und dennoch eine optimale Wirkung, so dass der Kostenaufwand und die Umweltbelastung minimiert werden. Das gelatinierte, hochverdichtete Granulat ist in seiner gewölbten Form abriebfest und staubfrei, so dass auch eine diesbezügliche Umweltbelastung nicht zu verzeichnen ist. Durch die kompaktierte, glatte Oberflächenausbildung in Verbindung mit einem in den Granulatpartikeln enthaltenen Feuchteschutzmittel wird eine hohe Wasserresistenz der Köderlinsen erzielt, so dass deren Form und Wirksamkeit auch nach 24-stündiger Feuchteeinwirkung erhalten bleibt. Die homogene Mischung der Inhaltsstoffe des Ködergranulats und dessen gute Wirkung aufgrund der zuvor erwähnten positiven Eigenschaften erlauben es schließlich, den Wirkstoffgehalt auf 3 % zu reduzieren. Dadurch wird die Umweltbelastung weiter gesenkt, ohne die Wirksamkeit des Schädlingsbekämpfungsmittels einzuschränken.

In einer bevorzugten Ausführungsform als Schneckenbekämpfungsmittel haben die Ködergranulatpartikel einen Durchmesser von 4 mm und eine maximale Höhe von 1,7 mm, wobei ein Kilogramm eines Schneckenbekämpfungsmittels 31 g Metaldehyd, 846,1 g Roggen- oder Weizenvollkornmehl, 60 g Weizenstärke, 50 g Polyacrylat, 8 g Propylenglykol, 0,8 g Berliner Blau, 4 g Sorbinsäure und 0,1 g Denatoniumbenzoat enthält. Die während der Herstellung des Ködergranulats für den Gelatinierungsprozess benötigte Feuchtigkeit (Wasser) wird im weiteren Verfahrensablauf wieder ausgetrieben.

Eine Ausführungsform der Erfindung zur beispielhaften Herstellung eines Schneckenbekämpfungsmittels wird nachfolgend anhand der Zeichnung näher erläutert. Es zeigen:
- Fig. 1: den Verfahrensablauf in den einzelnen Stufen eines Doppelwellenextruders mit parallel ineinandergreifenden und gegenläufigen Extruderschnecken; und
- Fig. 2: eine stark vergrößerte Darstellung eines linsen- und diskusförmigen Schneckenköders.

Die Herstellung eines erfindungsgemäß linsenförmigen Schneckenködergranulats erfolgt mit einem Doppelwellen-Granulierextruder mit zwei parallel ineinandergreifenden und gegenläufigen Extruderwellen.

In der hier beschriebenen Ausführungsform enthält das Schneckenbekämpfungsmittel pro kg Gesamtmasse

| | |
|---|---|
| 31 g | Metaldehyd |
| 846,1 g | Roggen- oder Weizenvollkornmehl |
| 60,0 g | Weizenstärke |
| 4,0 g | Sorbinsäure (Konservierungsmittel) |
| 0,8 g | Berliner Blau (Farbstoff) |
| 8,0 g | Propylenglykol |
| 50,0 g | wässrige Polyacrylat-Dispersion und |
| 0,1 g | Denatomiumbenzoat (Repellent), |

wobei im Verlauf des Verarbeitungsprozesses zur Gelatinierung Wasser hinzugefügt und später wieder ausgetrieben wird.

Nachdem die zunächst in den Extruder eingebrachten Feststoffe eine kurze Förder- und Mischstrecke durchlaufen haben, werden die flüssigen Bestandteile - Propylenglykol, Polyacrylat-Dispersion und zuzüglich 100 g Wasser/kg - in den Extruder eingetragen.

In der anschließenden Mischzone werden die Komponenten intensiv durchmischt. In die sich bildende plastische Masse wird mechanische Energie eingeleitet. Die durch die Scher- und Knetdrücke beim Mischen erzeugte Wärme bewirkt zusammen mit dem Feuchteanteil einen schnellen Aufschluss der Stärke zur Erzeugung einer plastischen, gelatinierten Masse. Die Stärke bildet mit Wasser in der Wärme kolloidale Lösungen, die beim Abkühlen zu einem Gel erstarren. Durch Verwendung von Glykol wird der Gelatinierungsprozess noch verbessert.

In einer darauf folgenden Entgasungs- und Dekompressionszone passiert die Masse Dekompressionsschnecken. Über eine in diese Zone angeschlossene Vakuumpumpe wird die in der plastischen Masse vorhandene Luft entzogen, d.h. die Lufteinschlüsse werden beseitigt. Jetzt liegt eine homogene plastische, gelatinierte Masse vor, die danach in eine Verdichtungszone gelangt, um für die nachfolgende strangartige Ausformung (Extrusion) durch eine Lochplatte hindurch verdichtet zu werden.

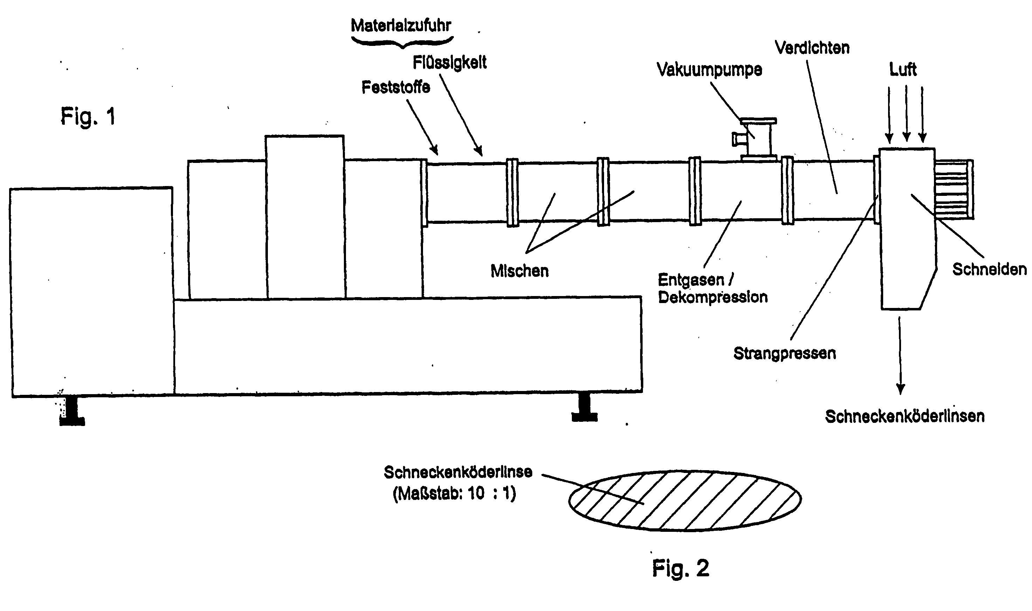

Die aus der Lochplatte austretenden kompaktierten gelatinierten Massestränge mit einem Strangdurchmesser von 4 cm werden unter gleichzeitiger Luftzufuhr unmittelbar nach der Extrusion mit einer Schneidvorrichtung in schmale Scheiben von ca. 1,5 Höhe geschnitten, die danach expandieren. Dadurch werden die gegenüberliegenden Scheibenflächen nach außen ausgebaucht, und die Scheiben erhalten eine linsenartige oder diskusartige Form, wie in Fig. 2 dargestellt. Während der auf die Gelatinierung folgenden Verarbeitungsstufen - Entgasen, Verdichten, Schneiden unter Luftzufuhr - wird der Masse bzw. den Granulatpartikeln die zuvor zugeführte Feuchtigkeit wieder entzogen.

Der Gelatinierungsprozess mit Stärke, Wasser und Glykol sowie unter Wärmeeinwirkung hat neben der der vorangegangenen Kompaktierung folgenden Expansion nach der Extrusion auch eine sehr glatte, abriebfeste Oberflächenausbildung zur Folge. Das so unter Zusatz der Polyacrylat-Dispersion ausgebildete Linsengranulat ist zudem in hohem Maße feuchtebeständig, so dass es in der praktischen Anwendung auch nach 24-stündiger Wassereinwirkung und anschließender Windtrocknung noch formstabil zur Schneckenbekämpfung zur Verfügung steht. Die Abriebfestigkeit und Feuchtebeständigkeit verhindern zudem eine Kontaminierung der Umgebung.

Die durch die Expansion der abgeschnittenen Strangplättchen bewirkte diskusförmige Ausbildung des Schneckenködergranulats ist mit hervorragenden Flugeigenschaften der Granulatpartikel verbunden, so dass maschinelle Streuweiten von etwa 24 m und eine gleichmäßige Verteilung (Flächenbelegung) mit den so geformten Ködern erzielt wird.

Aufgrund der großen Wurfweite können beim maschinellen Ausbringen der Schneckenköder sowohl die Personal- und Maschinenkosten als auch die Verluste minimiert werden. Andererseits ist durch das gleichmäßige Streubild eine optimale Schneckenbekämpfung bei optimalem Materialeinsatz möglich. Schließlich bewirkt die flache Scheibenform des Ködergranulats bei geringem Materialeinsatz eine dennoch dichte Flächenbelegung, wobei auch der Wirkstoffanteil mit 3 % Metaldehyd gegenüber herkömmlichem Schneckenködergranulat gering sein kann.

Im Vergleich zwischen den im Ausführungsbeispiel beschriebenen linsenförmigen Ködern mit 4 mm Durchmesser und 1,7 mm Höhe und herkömmlichen zylindrischen Ködern mit 2,5 mm Durchmesser und 3-8 mm Länge liegt die Stückzahl der Granulate in Zylinderform bei 47 Stück pro Gramm und in Linsenform bei 70 Stück pro Gramm, während bei einer Aufwandmenge von 0,3 g/m² (3 kg/ha) die Anzahl der Linsenformgranulate bei 21 Stück und die Anzahl der Zylinderformgranulate bei 14 Stück liegt. Das heißt, bei gleicher Aufwandmenge wird bei Einsatz von Schneckenködergranulat in Linsenform eine gegenüber der Zylinderform um 50 % höhere Belegungsdichte erzielt.

Die Erfindung ist nicht auf das vorliegende Ausführungsbeispiel beschränkt. Vielmehr sind im Rahmen des grundlegenden Erfindungsgedankens, der in der linsenförmigen Gestaltung und Herstellung des Ködergranulats besteht, noch verschiedene Abwandlungen und weitere Anwendungsmöglichkeiten unter Verwendung anderer Wirkstoffe denkbar. Zur Schneckenbekämpfung kann das Ködergranulat, abgesehen von dem bereits erwähnten Metaldehyd, auch Methiocarb, Thiodicarb oder Eisen-(III)-Phosphat enthalten. Weitere Modifikationen sind in bezug auf die anderen Inhaltsstoffe und die Größe der linsenförmigen Granulatpartikel möglich.

## Patentansprüche

1. Schädlingsbekämpfungsmittel zur Schneckenbekämpfung, bestehend aus scheibenförmigen Granulatpartikeln, die auf großen landwirtschaftlichen Anbauflächen ausgebracht werden und zur Erzielung großer Wurfweiten und einer gleichmäßigen Flächenbelegung besondere Flugeigenschaften aufweisen und als Flugkörper in Diskus- oder Linsenform ausgebildet sind.

2. Schädlingsbekämpfungsmittel nach Anspruch 1, **dadurch gekennzeichnet, dass** der Durchmesser der linsenförmigen Granulatpartikel mindestens zweimal so groß wie deren größte Höhe ist.

3. Schädlingsbekämpfungsmittel nach Anspruch 1 und 2, **dadurch gekennzeichnet, dass** der Durchmesser der Granulatpertikel 4 mm und deren Höhe 1,7 mm beträgt.

4. Schädlingsbekämpfungsmittel nach einem der Ansprüche 1 bis 3, **dadurch gekennzeichnet, dass** es für die Schneckenbekämpfung 2 bis 7 % Metaldehyd, 1 bis 20 % Stärke, 0,5 bis 10 % Glykol, 0,5 bis 10 % eines Polymers und 50 bis 95 % Ballaststoffe in Form von Getreidemehl sowie weitere Hilfsstoffe enthält.

5. Schädlingsbekämpfungsmittel nach Anspruch 4, **dadurch gekennzeichnet, dass** ein Kilogramm des Schneckenbekämpfungsmittels enthält:
31 g Metaldehyd, 846,1 g Roggen- oder Weizenvollkornmehl, 60 g Weizenstärke, 50 g Polyacrylat, 8 g Propylenglykol, 0,8 g Berliner Blau, 4 g Sorbinsäure und 0,1 g Denatoniumbenzoat.

6. Schädlingsbekämpfungsmittel nach einem der Ansprüche 1 bis 3, **dadurch gekennzeichnet, dass** es für die Schneckenbekämpfung weitere Wirkstoffe wie Methiocarb, Thiodicarb oder Eisen-(III)-Phosphat enthält.

7. Verfahren zur Herstellung des Schädlingsbekämpfungsmittels nach Anspruch 1, **dadurch gekennzeichnet, dass** in einem Gemisch aus den festen Inhaltsstoffen des Schädlingsbekämpfungsmittels die darin enthaltene Stärke unter dem Einfluss der Scher- und Knetwirkungen in einem weiteren Mischvorgang sowie der dabei erzeugten Wärme mit Wasser aufgeschlossen wird und nach einer Dekompressions- und Entgasungsphase im Vakuum unter Abkühlung eine plastische, gelatinierte Masse erzeugt wird, die nach anschließender Verdichtung extrudiert wird, wobei die austretenden runden Stränge unmittelbar nach der Extrusion unter Luftzufuhr in Scheiben geschnitten werden, die durch Expansion eine Linsen- oder Diskusform annehmen.

8. Verfahren nach Anspruch 8, **dadurch gekennzeichnet, dass** einem Feststoffgemisch aus dem Wirkstoff sowie Mehl und Stärke neben Wasser zur Erhöhung der Gelatinierung der Stärke und zur Senkung des Wasseranteils zusätzlich Glykol zugesetzt wird.

9. Verfahren nach Anspruch 7 und 8, **dadurch gekennzeichnet, dass** dem Feststoffgemisch zusätzlich eine wässrige Polymerdispersion als Feuchteschutzmittel sowie Sorbinsäure als Konservierungsmittel, Berliner Blau als Farbstoff und Denatoniumbenzoat als Repellent zugemischt werden.

10. Verfahren nach einem der Ansprüche 8 bis 10, **dadurch gekennzeichnet, dass** es in einem Doppelwellenextruder mit parallel ineinandergreifenden, gegenläufigen Schneckenwellen durchgeführt wird, wobei im Entgasungsbereich Dekompressionsschnecken und eine Vakuumpumpe angeordnet sind und den Extrusionsdüsen eine belüftete Schneideinrichtung zugeordnet ist.

## Claims

1. A pesticide for controlling slugs and snails, consisting of disk-shaped pellets that are applied to large areas of arable land comprising special aerodynamic qualities to achieve a great throw and spread the area evenly and being disk- or lentil-shaped flying objects.

2. The pesticide according to claim 1 **characterized in that** the diameter of the lentil-shaped pellets is at least twice their maximum height.

3. The pesticide according to claims 1 and 2, **characterized in that** the pellet diameter is 4 mm and the pellet height is 1.7 mm.

4. The pesticide according to any one of claims 1 through 3, **characterized in that** it contains 2 to 7% of metaldehyde, 1 to 20% of starch, 0.5 to 10% of glycol, 0.5 to 10% of a polymer, and 50 to 95% of roughage in the form of flour as well as other adjuvants for slug/snail control.

5. The pesticide according to claim 4, **characterized in that** one kilogram of the slug/snail control agent contains:
31 g of metaldehyde, 846.1 g of wholemeal rye or wheat flour, 60 g of wheat starch, 50 g of polyacrylate, 8 g of propylene glycol, 0.8 g of Berlin blue, 4 g of sorbic acid, and 0.1 g of denatonium benzoate.

6. The pesticide according to any one of claims one through 3, **characterized in that** it contains other active ingredients for slug/snail control such as methiocarb, thiodicarb, or ferric orthophosphate

7. A method for producing the pesticide according to claim 1 wherein the starch contained in a mixture of solid ingredients of the pesticide is opened up with water by shearing and kneading forces as well as by heat in another mixing process and that, after a decompressing and degassing phase in a vacuum, a plastic, gelatinated mass is produced by cooling, compacted and extruded, the extruded strands being cut under air supply into slices that take on a lentil or disc shape.

8. The method according to claim 8 wherein glycol is added in addition to water to a mixture of solids including the active ingredient as well as flour and starch to increase gelatination of the starch and to reduce water content.

9. The method according to claims 7 and 8 wherein an aqueous polymer dispersion as a water-blocking agent, sorbic acid as a preservative, Berlin blue as a dye, and denatonium benzoate as a repellent are added to the mixture of solids.

10. The method according to any one of claims 8 through 10, **characterized in that** it is conducted in a double-shaft extruder with counter-rotating extruder screws that engage in parallel, and that decompression screws and a vacuum pump are connected to the degassing section and that the extrusion dies are equipped with a ventilated cutting device.

## Revendications

1. Produit insecticide pour la lutte contre les escargots et les limaces, comprenant des particules de granulés en forme de plaquettes, qui sont répandues sur des surfaces d'exploitations agricoles de grande taille et qui, pour atteindre des distances de projection importantes et une répartition de surface régulière, présentent des propriétés de vol propre particulières et sont réalisées comme des objets volants sous forme de disques ou de lentilles.

2. Produit insecticide selon la revendication 1, **caractérisé en ce que** le diamètre des particules de granulés en forme de lentilles est au moins deux fois plus important que leur hauteur maximum.

3. Produit insecticide selon les revendications 1 et 2, **caractérisé en ce que** le diamètre des particules de granulés est de 4 mm et leur hauteur est de 1,7 mm.

4. Produit insecticide selon l'une des revendications 1 à 3, **caractérisé en ce que**, pour la lutte contre les escargots et les limaces, il contient 2 à 7 % de métaldéhyde, 1 à 20 % d'amidon, 0,5 à 10 % de glycol, 0,5 à 10 % d'un polymère, et 50 à 95 % de matériau de ballast sous forme de farine de céréales, ainsi que d'autres produits auxiliaires.

5. Produit insecticide selon la revendication 4, **caractérisé en ce qu'**un kilogramme de produit de lutte contre les escargots et les limaces contient :
31 g de métaldéhyde, 846,1 g de farine de seigle ou de farine entière de froment, 60 g d'amidon de blé, 50 g de polyacrylate, 8 g de propylène glycol, 0,8 g de bleu de Prusse, 4 g d'acide sorbique, et 0,1 g de benzoate de denatonium.

6. Produit insecticide selon l'une des revendications 1 à 3, **caractérisé en ce que**, pour la lutte contre les escargots et les limaces, il contient d'autres produits actifs tels que methiocarb, dithiocarb ou phosphate de fer (III).

7. Procédé pour la production du produit insecticide selon la revendication 1, **caractérisé en ce que**, dans un mélange contenant les ingrédients solides du produit insecticide, l'amidon contenu dans celui-ci est hydrolysé avec de l'eau en une autre opération de mélange sous l'influence des actions de cisaillement et de pétrissage ainsi que de la chaleur ainsi produite, et après une phase de décompression et de dégazage sous vide avec refroidissement, on produit une masse plastique gélatineuse qui, après compression successive, est extrudée, le cordon sortant de forme ronde est coupé en rondelles immédiatement après l'extrusion avec amenée d'air, lesdites rondelles adoptant par expansion la forme de lentilles ou de disques.

8. Procédé selon la revendication 7, **caractérisé en ce que** dans un mélange de produits solides contenant le produit actif ainsi que de la farine et de l'amidon, on ajoute en plus de l'eau en supplément du glycol pour augmenter la transformation de l'amidon en gélatine et pour abaisser la proportion d'eau.

9. Procédé selon les revendications 7 et 8, **caractérisé en ce qu'**on ajoute au mélange de produits solides en supplément une dispersion aqueuse de polymère à titre de produit de protection anti-humidité ainsi que de l'acide sorbique à titre d'agent de conservation, du bleu de Prusse à titre de colorant, et du benzoate de denatonium à titre de produit répulsif.

10. Procédé selon l'une des revendications 8 à 10, **caractérisé en ce qu'**il est mis en oeuvre dans une extrudeuse à arbre double avec des arbres à vis parallèles en engagement mutuel et tournant en sens opposés, avec des vis de décompression et une pompe à vide agencées dans la zone de dégazage, et dans laquelle un dispositif de coupe alimenté en air est associé aux buses d'extrusion.
